# EUROPEAN PATENT APPLICATION

(11) **EP 2 584 241 A1**
(43) Date of publication of application: **24.04.2013**
(21) Application number: 12185899.7
(22) Date of filing: 25.09.2012
(51) Int. Cl.: F16L 33/08, F16B 31/02

(54) **Torque control cap for hose clamp**

(30) Priority: 30.09.2011 KR 20110100136
(71) Applicant: Dong-A Metal Co., Ltd., Gyeongsangbuk-do 718-801 (KR)
(72) Inventor: Cho, Cheong Yong, Gyeonggi-do (KR); Kim, Jin Woo, Daegu (KR)
(74) Representative: Misselbrook, Paul

(57) **Abstract**

Disclosed is a torque control cap for a hose clamp (100), which makes the hose clamp (100) to fasten a hose with a set torque even if an excessive power if transferred to a fastening bolt (105), to prevent the hose clamp (100) and the hose from being damaged. The torque control cap (110) is applied to the hose clamp (100) comprising a clamp body (101) formed by circularly bending a narrow and long plate member and a detachable means configured to fasten or release a hose through decreasing or increasing a diameter of the clamp body (101) and installed at one of a right side end or a left side end of the clamp body (101), and is configured to fasten a fastening bolt (105) with an optimum torque in accordance with a size, a type, or a material of the hose and prevent the hose and the hose clamp (100) from being damaged, and the torque control cap (110) includes a fastening tip (112) coupled to a head (111) of the fastening bolt (105) to transfer a fastening force of a tool to the fastening bolt, and a cutaway part (113) configured to be separated when power equal to or larger than a set torque in which the hose can be fastened in an optimal state is transferred and prevent the fastening force from being transferred to the fastening bolt (105) any longer, the cutaway part (113) being formed in the head (111) and the fastening tip (112).

## Description

### BACKGROUND OF THE INVENTION

### 1. Field of the invention

The present invention relates to a torque control cap for a hose clamp, and more particularly to an improved cap, which is coupled to a fastening bolt for fastening or releasing a hose clamp, thereby preventing the hose clamp and a hose from being deformed or damaged due to excessive fastening with a torque higher than an optimum torque.

### 2. Description of the Prior Art

A hose clamp is used for fastening a hose used for making fluid or air flow into a brake, an air conditioning system, a power steering apparatus, or an engine compartment of a vehicle, a pipe connected for the flow of fluid or air in other industrial places, or a hose connected to an exterior surface of a connected pipe body so it prevents the hose or the pipe from being separated.

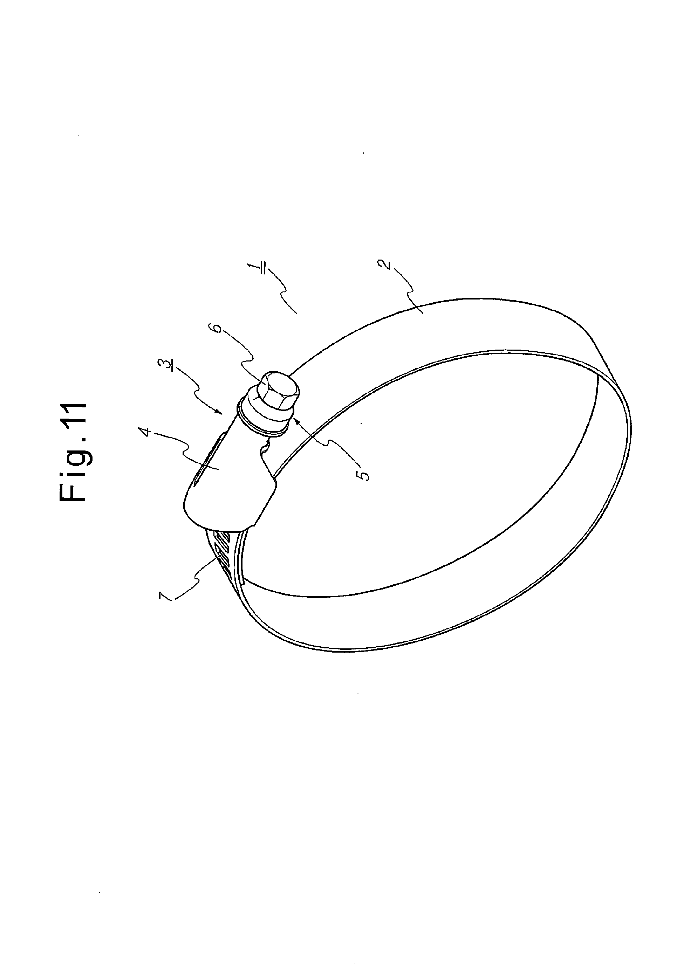

Various types of hose clamp have been conventionally used, and a representative example of the conventional hose clamp is described with reference to FIG. 11.

The conventional hose clamp 1 includes a clamp body 2 formed by circularly bending a narrow and long plate member and a detachable means 3 configured to fasten or release a hose through increasing or decreasing a diameter of the clamp body 2 at one of a right side end or a left side end of the clamp body 2.

The detachable means 3 includes a fastening housing 4 fixed to one end of the clamp body 2, a fastening bolt 5 is rotatably coupled to an inside of the fastening housing 4, and the fastening bolt 5 has tool usage surfaces 6 so as to apply a fastening force by using a tool.

A screw of the fastening bolt 5 is engaged with fastening slots 7 formed in the clamp body 2 and the diameter of the clamp body 2 is decreased or increased by rotation or reverse rotation of the fastening bolt 5, so that the hose is fastened or released.

According to the conventional hose clamp, the fastening bolt is rotated in a fastening direction manually or through an electromotive tool assembled with the tool usage surface of the fastening bolt so as to fasten the hose, so that the hose may be fastened while the diameter of the clamp body is decreased.

Although the hose should be fastened with an appropriate torque in accordance with a usage and a type of the used hose when fastening the hose, the fastening bolt is rotated depending on a sense of an operator so that the hose is fastened with a lower torque or an excessive torque compared to the optimum torque, thereby negatively affecting the hose or the hose clamp.

That is, when the fastening bolt is rotated with a lower torque than the optimum torque, a power of the clamp body for fastening the hose is small. In this case, if a pressure of the fluid flowing inside the hose is high, and a connection state of the hose is released.

Further, when the fastening bolt is rotated with a higher torque than the optimum torque so as to fasten the hose, a power of the clamp body for fastening the hose is excessively generated. Accordingly, the clamp body is penetrated into the surface of the hose so that the hose is damaged and the clamp body is also deformed or damaged.

In order to solve the aforementioned problems, a tool having a torque setting function may be used. However, the expense of the tool is excessively high compared to the expense for an operation of connecting the hose, so that it is realistically impossible to apply and use the tool in the operation site.

As such, when the lower torque or excessive torque compared to the optimum torque is applied in applying the fastening force to the fastening bolt, there occurs a symptom of discharging of the fluid flowing in the inside of the hose due to abnormal fastening of the hose.

The discharging of the fluid flowing in the inside of the hose causes the interruption of an operation of a facility or equipment, so it is impossible to continuously operate, thereby causing deterioration of a smooth operation or a productivity.

Further, in the event that the connection state of the hose is released and the fluid flowing in the inside of the hose is discharged, if the fluid has a high temperature and a high pressure, the discharged fluid causes physical damage to neighboring workers and pollution of neighboring facilities or equipment, and further considerable time and efforts are required for repairing or maintaining the facilities or equipment, thereby causing several problems, such as an increase of the economical burden in the expense.

### SUMMARY OF THE INVENTION

Accordingly, the present invention has been made to solve the above-mentioned problems occurring in the prior art, and the present invention provides a torque control cap for a hose clamp, which is applied to the hose clamp including a clamp body formed by circularly bending a narrow and long plate member and a detachable means configured to fasten or release a hose through decreasing or increasing a diameter of the clamp body and installed at one of a right side end or a left side end of the clamp body, and is configured to fasten a fastening bolt with an optimum torque in accordance with a size, a type, or a material of the hose and prevent the hose and the hose clamp from being damaged, the torque control cap including: a fastening tip coupled to a head of the fastening bolt to transfer a fastening force of a tool to the fastening bolt; and a cutaway part configured to be separated when power equal to or larger than a set torque in which the hose can be fastened in an optimal state is transferred and prevent the fastening force from being transferred to the fastening bolt any longer, the cutaway part being formed in the head and the fastening tip.

Therefore, although an excessive power is transferred to the fastening bolt, the present invention makes the hose clamp be fastened only with the set torque, thereby achieving an effect of preventing the hose clamp and the hose from being damaged.

The present invention improves a fastening state of fastening the hose through tightening the clamp body, and when the torque equal to or larger than the set torque is transferred to the fastening bolt, the cutaway part is separated, so that the fastening force is not transferred to the fastening bolt, thereby always fastening the hose with the optimum torque. Therefore, the present invention provides various effects such as the ease of fastening, removing the need for repair and maintenance after the fastening, and guaranteeing a continuous smooth operation of a facility or equipment connected with the hose.

### BRIEF DESCRIPTION OF THE DRAWINGS

The above and other objects, features and advantages of the present invention will be more apparent from the following detailed description taken in conjunction with the accompanying drawings, in which:
FIG. 1 is a perspective view illustrating a hose clamp coupled with a fastening bolt according to the present invention;
FIG. 2 is an exploded perspective view illustrating a first example of a torque control cap of a hose clamp according to the present invention;
FIG. 3 is a cross-sectional view illustrating a torque control cap of a hose clamp taken along the line A-A according to the present invention;
FIG. 4 is a cross-sectional view illustrating a torque control cap of a hose clamp taken along the line B-B according to the present invention;
FIG. 5 is an exploded perspective view illustrating a second example of a torque control cap of a hose clamp according to the present invention;

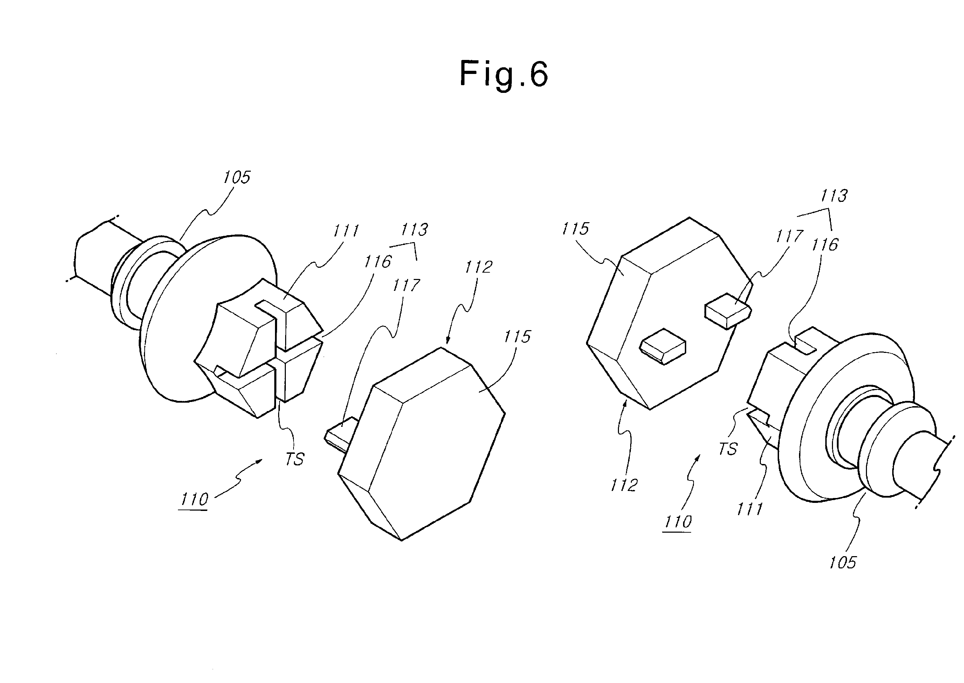

FIG. 6 is an exploded perspective view illustrating a third example of a torque control cap of a hose clamp according to the present invention;
FIG. 7 is an exploded perspective view illustrating a fourth example of a torque control cap of a hose clamp according to the present invention;
FIG. 8 is an exploded perspective view illustrating a fifth example of a torque control cap of a hose clamp according to the present invention;
FIG. 9 is an exploded perspective view illustrating a sixth example of a torque control cap of a hose clamp according to the present invention;
FIG. 10 is an exploded perspective view illustrating a seventh example of a torque control cap of a hose clamp according to the present invention; and
FIG. 11 is a diagram illustrating a hose clamp to which a fastening bolt is coupled according to a conventional art.

### DETAILED DESCRIPTION OF THE EXEMPLARY EMBODIMENTS

Hereinafter, a preferably construction and operation of the present invention so as to achieve the above aspect will be described with reference to the accompanying drawings.

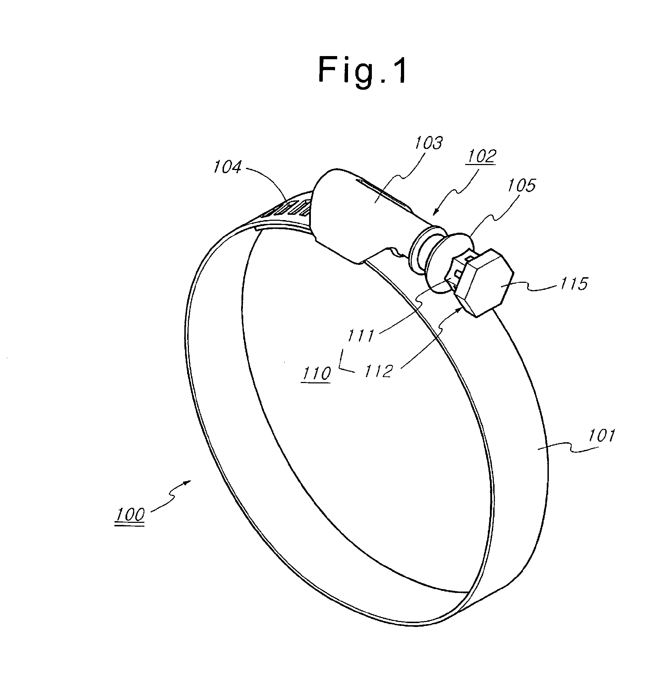

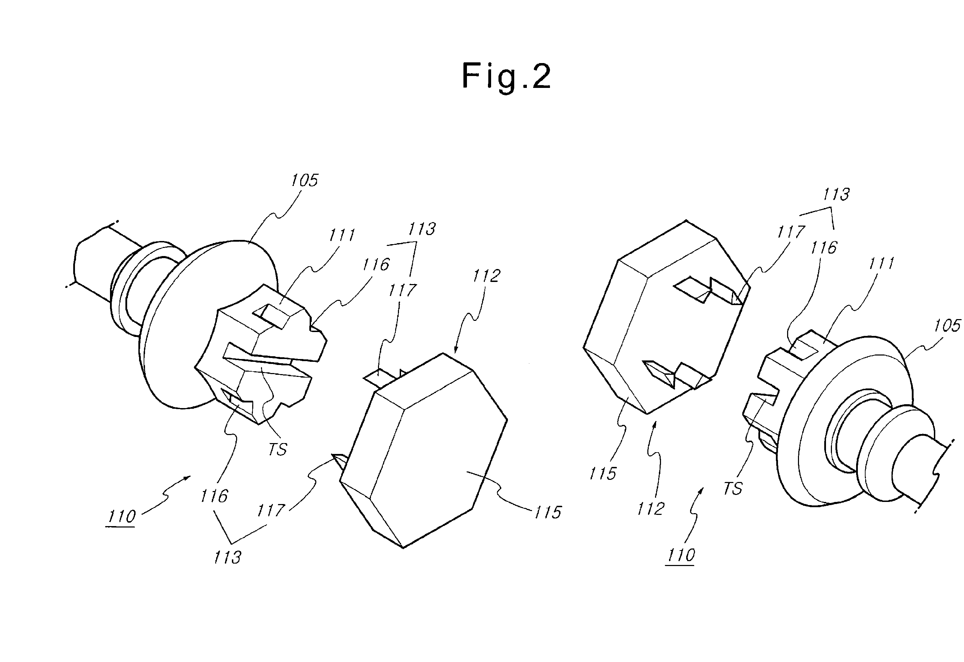

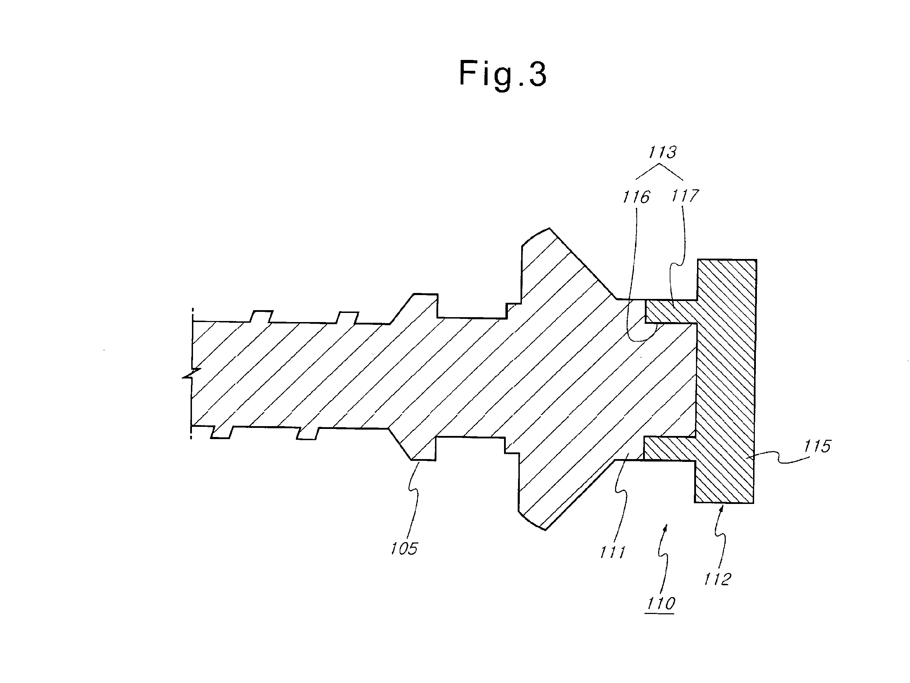

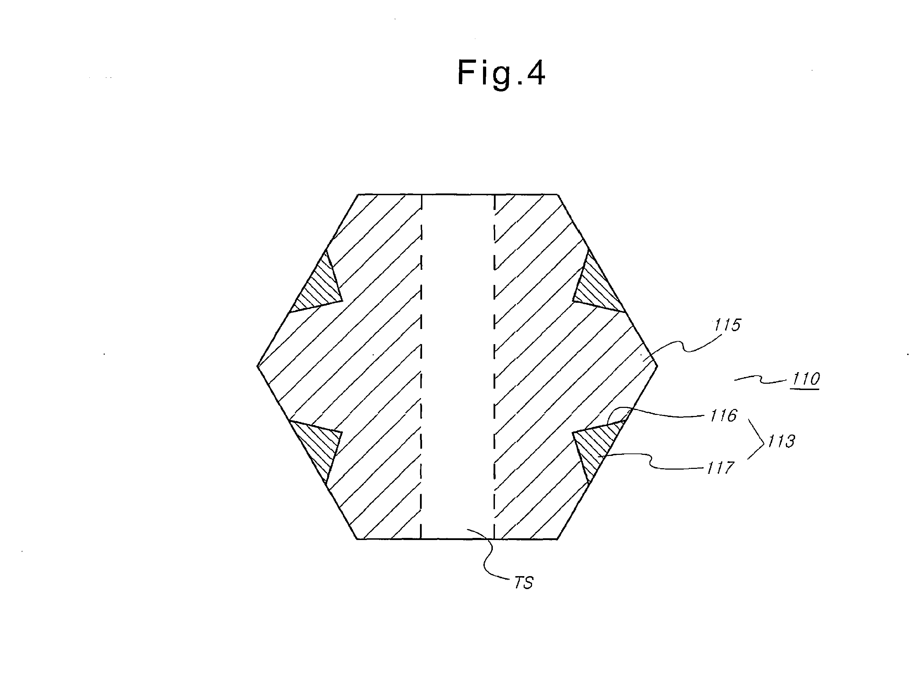

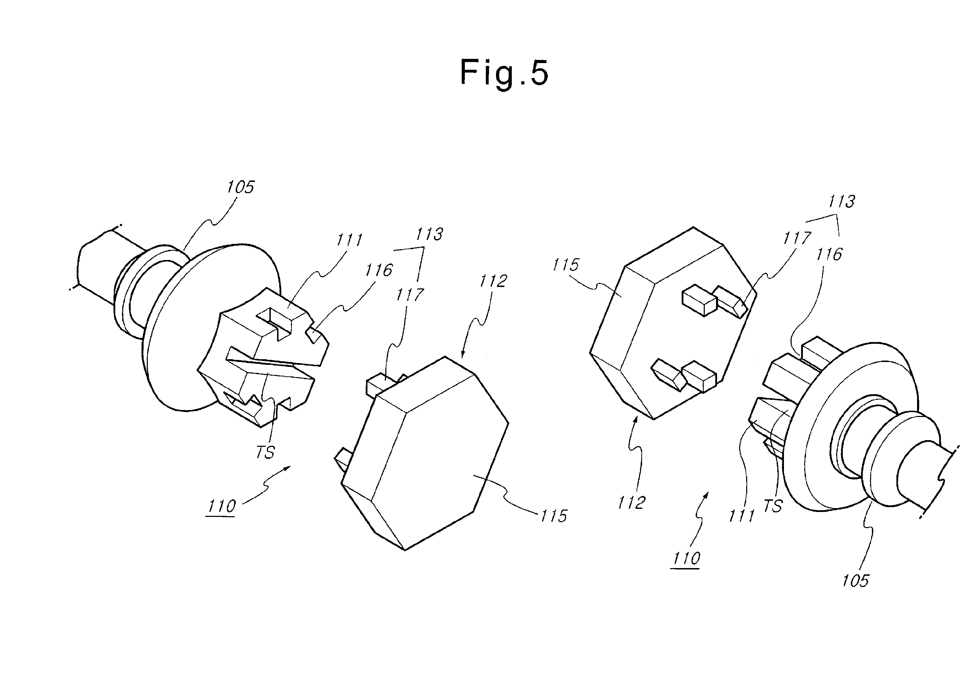

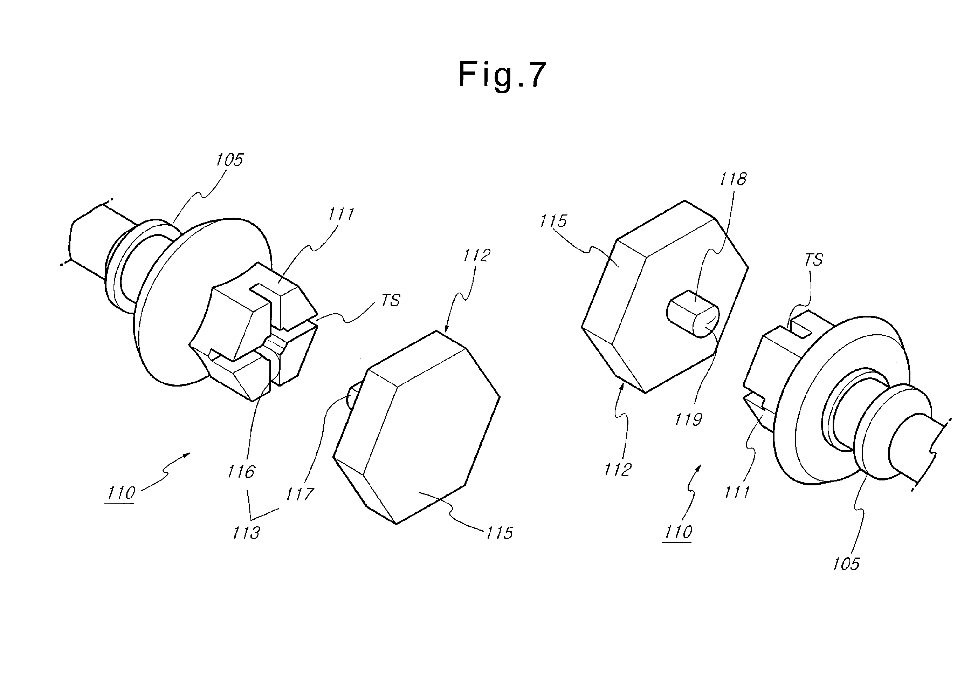

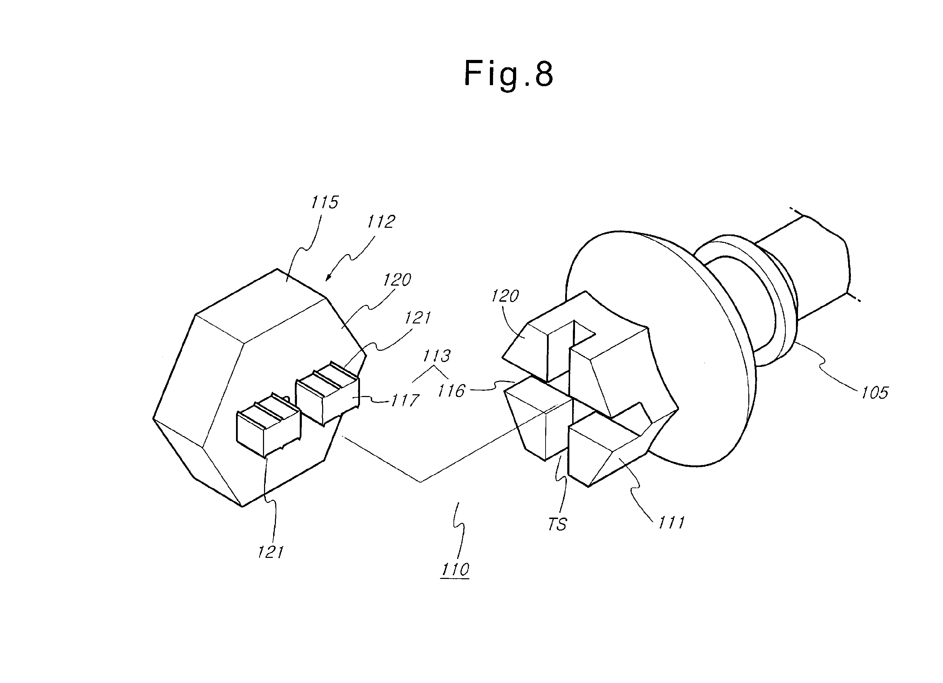

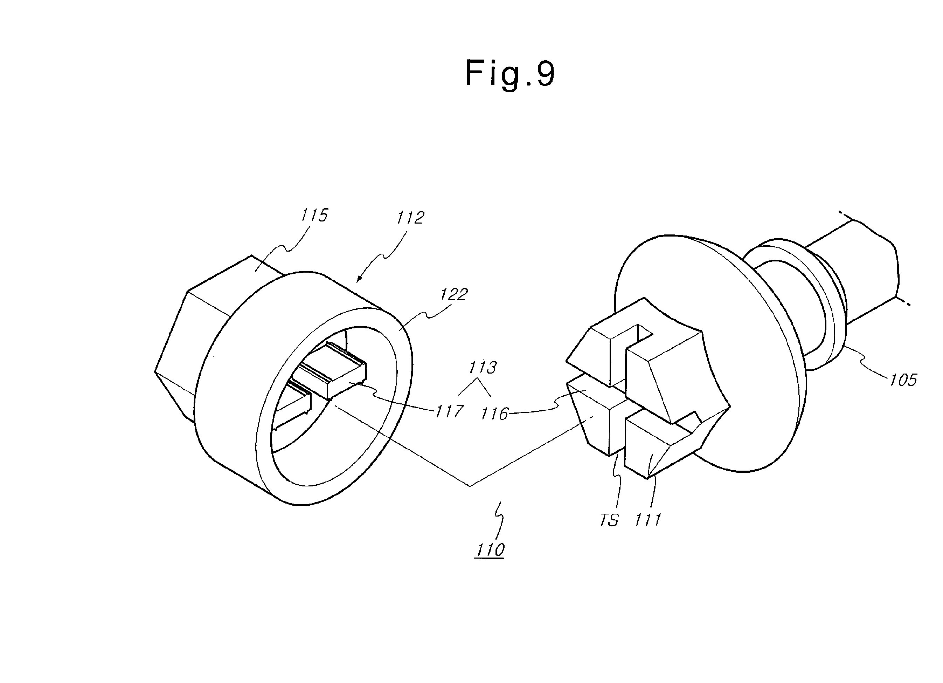

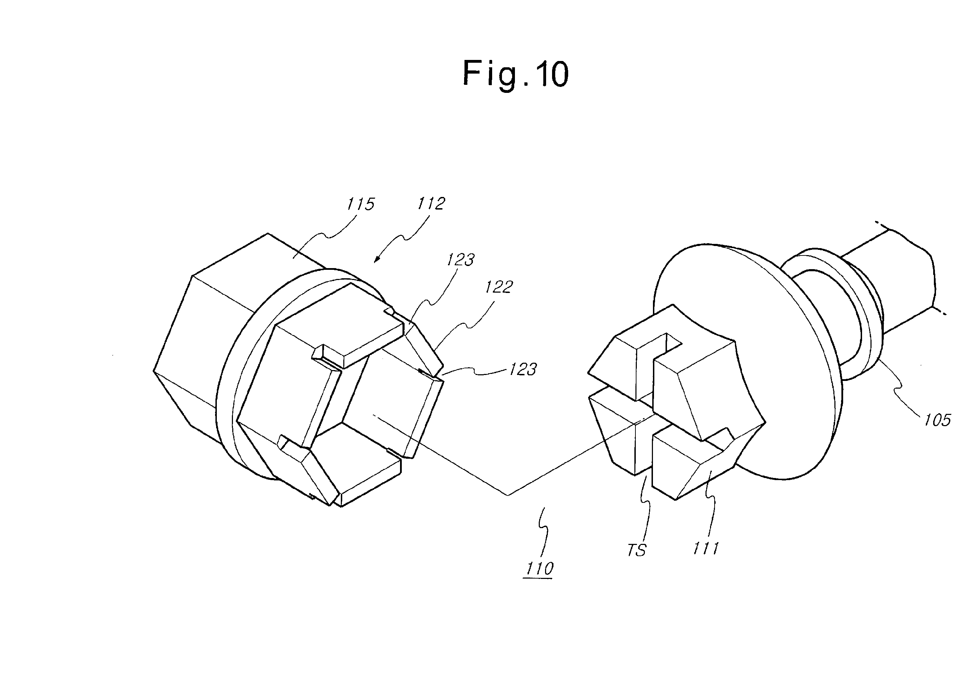

FIG. 1 is a perspective view illustrating a hose clamp coupled with a fastening bolt according to the present invention; FIG. 2 is an exploded perspective view illustrating a first example of a torque control cap of a hose clamp according to the present invention; FIG. 3 is a cross-sectional view illustrating a torque control cap of a hose clamp taken along the line A-A according to the present invention; FIG. 4 is a cross-sectional view illustrating a torque control cap of a hose clamp taken along the line B-B according to the present invention; FIG. 5 is an exploded perspective view illustrating a second example of a torque control cap of a hose clamp according to the present invention; FIG. 3 is an exploded perspective view illustrating a third example of a torque control cap of a hose clamp according to the present invention; FIG. 7 is an exploded perspective view illustrating a fourth example of a torque control cap of a hose clamp according to the present invention; FIG. 8 is an exploded perspective view illustrating a fifth example of a torque control cap of a hose clamp according to the present invention; FIG. 9 is an exploded perspective view illustrating a sixth example of a torque control cap of a hose clamp according to the present invention; FIG. 10 is an exploded perspective view illustrating a seventh example of a torque control cap of a hose clamp according to the present invention.

A conventional hose clamp 100 include a clamp body 101 formed by circularly bending a narrow and long plate member and a detachable means 102 configured to fasten or release a hose through increasing or decreasing a diameter of the clamp body 101 and installed at one of a right side end or a left side end of the clamp body 101.

The detachable means 102 includes a fastening housing 103 fixed to one end of the clamp body 101 and a fastening bolt 105 is rotatably coupled to an inside of the fastening housing 103. A screw formed at the fastening bolt 105 is engaged with fastening slots 104 formed at the clamp body 101, and the diameter of the clamp body 101 is increased or decrease by rotation or reverse rotation of the fastening bolt 105, so that the hose may be fastened and released.

The hose clamp 100 of the present invention further includes a torque control cap 110 configured to fasten the fastening bolt 105 with an optimum torque in accordance with a size, a type, or a material of the hose to be fastened and prevent not only the hose clamp 100 but also the hose from being damaged.

The torque control cap 110 includes a fastening tip 112 coupled to a head 111 of the fastening bolt 105 to transfer a fastening force of a tool to the fastening bolt 105, and a cutaway part 113 formed in the head 111 and the fastening tip 112 to be separated when power equal to or larger than a set torque with which the hose can be fastened in an optimal state is transferred, to prevent the fastening force from being transferred to the fastening bolt 105.

The fastening tip 112 has a tip body 115 having various shapes, such as a triangle, a square, a pentagon, a hexagon, and a circle having a knurling at an exterior surface thereof, so as to be assembled with a tool. A size of the tip body 115 has a size smaller than a maximum outer diameter of the fastening bolt 105 so as to provide ease in the usage of the tool, and thus prevent interference in the fastening process.

The cutaway part 113 includes hermaphrodite cutaway grooves 116 and cutaway bosses 117 at a contact position of the head 111 and the tip body 115 to generate a fastening force in a state where the cutaway grooves 116 are engaged with the cutaway bosses 117. When power larger than the set torque is transferred, the cutaway bosses 117 are separated from the cutaway grooves so that the electric power of the tool is not transferred to the fastening bolt 105 any longer.

In the first example of the present invention, the cutaway part 113 includes multiple opened cutaway grooves 116 at an outer peripheral surface of the head 111 of the fastening bolt 105 and multiple cutaway bosses 117 formed at positions of the tip body 115 corresponding to the cutaway grooves 116 to be engaged with the cutaway grooves 116.

Cross sections of the cutaway groove 116 and the cutaway boss 117 are substantially shaped like a triangle in the first example, but cross sections of the cutaway groove 116 and the cutaway boss 116 are substantially shaped like a square in the second example.

It would be acceptable that the cutaway groove 116 formed at the head 111 is not opened in the outer surface, and it is a matter of course that the cutaway groove 116 and the cutaway boss 116 has various shapes, in addition to a triangle and a square.

In the third example, the straight or cross-shaped cutaway groove 116 is formed at the head 111, and the cutaway boss 118 is shaped like a straight line or a cross so as to be engaged with the cutaway groove 116.

In the fourth example, the cutaway groove 116 is formed at a center of the head 111 and each circle-shaped cutaway boss 117 is formed at a position of the tip body 115 corresponding to the cutaway groove 116. The cutaway groove 116 and the cutaway boss 117 further include a rotation preventing surface 118 or the cutaway groove 116 and the cutaway boss 117 may be shaped like a polygon, in addition to a cylinder shape, in order to prevent no-load rotation in a process of transferring the power of the tool to the fastening bolt 105.

It is preferable to perform a size management so as to prevent the cutaway groove 116 and the cutaway boss 117 from being easily separated from their engaged state. A sharp or round entrance guide 119 is integrally formed with the cutaway boss 117 at an end of the cutaway boss 117 such that the cutaway boss 117 is easily inserted into the cutaway groove 116.

It is a matter of course that a size (diameter, thickness, length, etc.) of the cutaway groove 116 and the cutaway boss 117 may be different depending on a size, a type, or the like of the hose to be fastened or a result of a test.

In the fifth example, the cutaway bosses 117 and the cutaway grooves 116 of the cutaway part 113 are formed in facing contract surfaces 120 of the head 111 or the fastening tip 112 within the contact surfaces 120 in a shape by which the cutaway boss 117 can be engaged with the cutaway groove 116, respectively.

The cutaway boss 117 includes fine separation preventing protrusions 121 at the outer surface thereof in order to prevent the cutaway boss 117 from being easily separated from the cutaway groove 116 due to a size error when the cutaway boss 117 is engaged with the cutaway groove 116, thereby maintaining solid engagement force.

In the sixth example, any one of the head 111 and the fastening tip 112 includes a socket 122 capable of receiving the head 111 or the fastening tip 112, and the cutaway bosses 117 and the cutaway grooves 116 of the cutaway part 113 are formed in facing contract surfaces 120 of the head 111 or the fastening tip 112 within the contact surfaces 120 in a shape by which the cutaway boss 117 can be engaged with the cutaway groove 116, respectively.

In the seventh example, any one of the head 111 and the fastening tip 112 includes a socket 122 capable of accommodating the head 111 or the fastening tip 112. The socket 122 includes a plurality of cutaway slots 123, so that when power equal to or larger than a set torque is transferred, the socket 122 of the portion of the cutaway slot 123 is opened and deformed and thus the electric power of the tool is not transferred to the fastening bolt.

In a case where the cutaway slot 123s are formed at straight surfaces of the socket 122, if the torque is excessively transferred, it is difficult to switch the electric power through the separation, so that it is preferred that the cutaway slots 123 are formed at corner parts of the socket 112 to which great power is transferred in the engagement process as shown in FIG. 10.

The cutaway slot 123 has a diamond-shaped cross section formed by cutting away the corner of the socket 122 from an outer surface to an inner surface of the corner of the socket 122, but it is acceptable that the cutaway slot 123 has a cross section formed by cutting away the corner of the socket 122 from the inner surface to the outer surface of the corner of the socket 122.

A process of fastening the hose clamp 110 by the fastening bolt 105 by using the torque control cap 110 according to the present invention will be described.

When the hose clamp 100 is coupled to the outer diameter of the hose after making the diameter of the hose clamp 100 be larger than that of the hose and the hose is completely connected with a subject body, the hose clamp 100 is moved to a position at which the hose is connected with the subject body and the outer diameter of the hose is pressurized through decreasing the diameter of the hose clamp 100, so that the hose is fastened.

When the electric power of the tool is transferred to the fastening bolt 105 through the torque control cap 110 formed in the fastening bolt 105 of the hose clamp 100 in order to fasten the hose, the torque control cap receives the power of the tool and decreases the diameter of the hose clamp 100 to fasten the hose, and completes the fastening of the hose at the optimum torque (set torque). Accordingly, the torque control cap can prevent the hose clamp 100 and the hose from being damaged due to the excessive fastening of the hose by the hose clamp 100.

That is, when the tool is assembled with the fastening tip 112 coupled to the head 111 of the fastening bolt 105 and then the fastening bolt 105 is rotated, the cutaway part 113 is separated when the power equal to or larger than the set torque is transferred to the fastening tip 112, so that the power of the tool is not transferred to the fastening bolt 109 by the cutaway part 113 of the head 111 and the fastening tip 112.

In a state where the cutaway groove 116 and the cutaway boss 117 of the cutaway part 113 formed in the head 111 and the tip body 115 are coupled to each other, the power of the tool is transferred to the cutaway grooves 116 through the cutaway bosses 117. In this process, when the power larger than the set torque is transferred to the cutaway bosses 117, the cutaway bosses 117 are separated so that the power is not transferred to the fastening bolt 109 any longer.

As a matter of course, the head 111 of the fastening bolt 105 of the detachable means 102 according to the present invention further includes a tool use groove (TS) allowing the use of the tool, such as a driver, so as to release the fastening completed fastening bolt 105 or fasten the fastening bolt 105 up to the set torque when the cutaway part 113 is separated in a torque lower than the set torque so the fastening force is insufficient.

Accordingly, the present invention makes the hose clamp fasten the hose only with the set torque even though excessive power is transferred to the fastening bolt of the hose clamp, thereby advantageously preventing the hose clamp and the hose from being damaged.

The exemplary embodiments and the accompanied drawings of the present invention have been described for simply describing a part of the technical spirit of the present invention. Accordingly, the embodiments in the present specification have been described for the purpose of the illustration of the technical spirit of the present invention, not for the purpose of the limitation, so that those skilled in the art will appreciate that the scope of the technical spirit of the present invention is not limited by the described embodiments.

Further, it shall be construed that all modifications and specific embodiments easily conceivable by those skilled in the art within the scope of the technical spirit included in the specification and drawings of the present invention belong to the scope of the right of the present invention.

## Claims

1. A torque control cap (110) for a hose clamp (100), which is applied to the hose clamp (100) comprising a clamp body (101) formed by circularly bending a narrow and long plate member and a detachable means configured to fasten or release a hose through decreasing or increasing a diameter of the clamp body (101) and installed at one of a right side end or a left side end of the clamp body (101), and is configured to fasten a fastening bolt (105) with an optimum torque in accordance with a size, a type, or a material of the hose and prevent the hose and the hose clamp (100) from being damaged, the torque control cap (110) comprising:
a fastening tip (112) coupled to a head (111) of the fastening bolt (105) to transfer a fastening force of a tool to the fastening bolt (105); and
a cutaway part (113) configured to be separated when power equal to or larger than a set torque in which the hose can be fastened in an optimal state is transferred and prevent the fastening force from being transferred to the fastening bolt (105) any longer, the cutaway part (113) being formed in the head (111) and the fastening tip (112).

2. The torque control cap (110) as claimed in claim 1, wherein the fastening tip (112) comprises a tip body (115) through which the fastening tip (112) can be assembled with a tool,
the cutaway part (113) comprises hermaphrodite cutaway grooves (116) and cutaway bosses (117) at contact positions of the head (111) and the tip body (115), and
the fastening tip (112) and the cutaway part (113) generate the fastening force in a state where the fastening tip is coupled to the cutaway part (113), and when the power equal to or larger than the set torque is transferred, the cutaway part (113) is separated, so that an electric power of the tool is not transferred to the fastening bolt (105) any longer.

3. The torque control cap (110) as claimed in claim 2, wherein the cutaway groove (116) and the cutaway boss (117) have a rotation preventing surface (118) capable of preventing no-load rotation of the cutaway groove (116) and the cutaway boss (117) in a process of transferring the power of the tool to the fastening bolt, or have a shape by which the cutaway groove (116) and the cutaway boss (117) cannot be no-load rotated.

4. The torque control cap (110) as claimed in claim 2 or claim 3, wherein the cutaway boss (117) comprises an entrance guide (119) at an end thereof so as to be easily inserted into the cutaway groove (116).

5. The torque control cap (110) as claimed in claim 2, 3 or 4, wherein the cutaway boss (117) comprises separation preventing projections (121) capable of preventing the cutaway boss (117) from being easily separated from the cutaway groove (116) at an outer surface thereof.

6. The torque control cap (110) as claimed in any preceding claim, wherein a socket (122) capable of accommodating the head (111) or the fastening tip (112) is formed in one of the head (111) and the fastening tip (112).

7. The torque control cap (110) as claimed in claim 6, wherein the socket (122) comprises cutaway slots (123) which is deformed when the power equal to or larger than the set torque is transferred to interrupt the transference of the electric power.

8. The torque control cap (110) as claimed in any preceding claim, wherein the head (111) of the fastening bolt (105) of the detachable means includes a tool usage groove (TS) allowing the use of the tool so as to release the fastening completed fastening bolt (105) or fasten the fastening bolt (105) up to the set torque when the cutaway part (113) is separated in a torque lower than the set torque so that the fastening force is insufficient.
